(19) **Europäisches Patentamt / European Patent Office / Office européen des brevets**

(11) **EP 2 620 543 B1**

(12) **EUROPEAN PATENT SPECIFICATION**

(45) Date of publication and mention
of the grant of the patent:
**07.09.2016 Bulletin 2016/36**

(51) Int Cl.:
*D06P 5/00* (2006.01)    *B41J 2/01* (2006.01)
*D06B 1/02* (2006.01)    *D06B 11/00* (2006.01)
*B41M 5/00* (2006.01)    *B41M 7/00* (2006.01)

(21) Application number: **11826632.9**

(22) Date of filing: **13.07.2011**

(86) International application number:
**PCT/JP2011/066000**

(87) International publication number:
**WO 2012/039186 (29.03.2012 Gazette 2012/13)**

(54) **PRINTING METHOD AND PRINTING DEVICE**

DRUCKVERFAHREN UND -VORRICHTUNG

PROCÉDÉ D'IMPRESSION ET DISPOSITIF D'IMPRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2011 JP 2011116975
24.09.2010 JP 2010213594**

(43) Date of publication of application:
**31.07.2013 Bulletin 2013/31**

(73) Proprietor: **FUJIFILM Corporation
Tokyo 106-0031 (JP)**

(72) Inventor: **OHTSUKA Shuichi
Ashigara-kami-gun
Kanagawa 258-8538 (JP)**

(74) Representative: **Klunker . Schmitt-Nilson . Hirsch
Patentanwälte
Destouchesstraße 68
80796 München (DE)**

(56) References cited:
**EP-A1- 1 125 760    EP-A2- 2 078 786
JP-A- 2003 049 375    JP-A- 2003 247 179
JP-A- 2005 206 974    JP-A- 2006 015 725
JP-A- 2008 062 389    JP-A- 2008 231 617
US-A1- 2009 104 367**

**Description**

The present invention relates to a printing method and a printing device. Particularly, it related to a method and a device for printing by an ink jet method on a printing medium containing a plurality of regions having different capillary forces from each other.

BACKGROUND ART

For its simple structure and high-speed printing capability, the ink jet method is widely used, trials are being made to print on not only paper but a variety of printing media including cloths, textiles, and smooth resin surfaces. In recent years, the forms and materials of these printing media have diversified, generating demand for printing on a printing medium made of a composite material such that one printing medium contains materials having different printing characteristics. Thus, there is a demand for dyeing any of the regions of such a printing medium with a desired coloring.

In order to achieve a desired color development on a printing medium, ink droplets deposited on the printing medium must remain in deposition positions and be controllable.

The ink droplets printed on a printing medium are characterized by the capillary force and the capillary force length that are based on the surface tension. When an ink droplet has a size that is sufficiently small (e.g., 1/10) as compared with a capillary force length (2) serving as an index of a size permitting retention of a liquid droplet by virtue of surface tension, the ink droplet can remain in a deposition position on a smooth surface. However, as the printing density increases and thereby ink droplets unite to assume a size equivalent to, for example, the capillary force length, effects produced by, for example, gravity increase and cause an unpredictable movement of liquid droplets. When the deposition position is located on a projecting flat surface, the ease with which droplets move increases with the radius of curvature of the surface. Therefore, the radius of the droplets is preferably not greater than the radius of curvature.

The capillary force is a force based on the surface tension and acting on a liquid droplet as expressed in equation (1) and is great in, for example, small holes, the interior of a thread, and pits because, in such places, the ink-holding inter-substance distance (a mean distance between wall substances constituting a region where the ink is held) r is small. The capillary force is also great in a region having a good wettability and a small angle of contact.

$$p = a\gamma\cos\theta/r \ \ldots \ (1)$$

where p is a capillary force (pressure) per unit area, a is a proportionality constant, $\gamma$ a surface tension of the ink solution, $\theta$ an angle of contact indicating the wettability between ink and object substance, and r a distance between substances holding the ink.

The capillary force length is expressed in a following equation. It is typically about 1 mm.

$$1/\kappa = (\gamma/\rho \cdot g)^{1/2} \ \ldots \ (2)$$

where $1/\kappa$ is a capillary force length, $\gamma$ a surface tension, $\rho$ a specific gravity, and g the acceleration of gravity.

A droplet sufficiently smaller than the capillary force length is free from an outside force such as gravity and can remain in its deposition position by virtue of surface tension. When liquid droplets unite and assume a size equivalent to or greater than the capillary force length, the liquid droplets become unstable, and an unpredictable movement begins. When, in particular, a base texture lies in the vicinity, the deposited ink droplets, on which a smaller capillary force acts than the capillary force produced by the base texture, move to the base texture having a great capillary force.

Printing media composed of a fabric include, for example, a fabric where a polyester-made fastener or buttons are attached to a base texture of the fabric, and a raised fabric whose base texture has a raised surface. The fastener's snaps, the buttons, and the raised portion present smooth projecting shapes for the ink droplets shot at them and, as such, the ink droplets do not easily remain thereon. Flat, resin-made printing media include, for example, plastic cards and resin moldings. Among them are flat resin sheets formed with an asperity and resin sheets having a part thereof subjected to matting treatment or hydrophilizing treatment. Thus, a flat resin material has partly different capillary forces. Specifically, pits formed in the surface of a resin sheet and a region of a resin sheet subjected to matting treatment have a high capillary force.

With such printing media, a capability of printing on a region not allowing easy retention of ink because of a small capillary force (e.g., snaps attached to a fabric, a raised portion of the raised fabric, and the surface of a resin sheet) is required. In addition, in such printing media, regions allowing easy retention of ink by virtue of a high capillary force (e.g., a base texture in a fabric, pits and a matting-treated region in the surface of a resin sheet) are located in the vicinity. Thus, ink droplets shot at a region having a small capillary force tend to move to a region having a great capillary force, making it difficult to retain a given amount of ink in a region having a small capillary force and achieve dyeing with a target color.

Patent Literature 1, for example, proposes changing the nozzle diameter for the root and for the top of the raised portion, where uniform dyeing is difficult, of a raised fabric, in order to effect dyeing thereof with different colors and thereby achieve dyeing of the whole with a target color.

CITATION LIST

PATENT LITERATURE

Patent Literature 1: JP 3-69631 A US 2009/104367 A1 discloses a printing method and a printing device, respectively, in which a coating is applied to a recording medium and an ink is applied to the coating independent from the step of applying the coating. The coating comprises an initiator which rapidly reduces the flowability of the ink to the recording material.

EP 1 125 760 A1 discloses a printing method and a printing device in which a reaction solution containing a reactant capable of forming coagulate upon contact with ink is applied to a recording medium prior to depositing the ink.

JP 2003 247 179 A discloses a printing method and a printing device for forming an image on a fabric. A bleeding preventing layer, an ink receiving layer or a water-repellant layer is formed in advance in the fabric by impregnation, coating, spraying and the like as a pretreatment in order to obtain a clear image with the fabric receiving precisely an ink-jet ink.

JP 2008 231 617 discloses an ink jet printing method and ink jet printing device for printing on a fabric. After ink jet recording, a post-treatment is applied followed by a heating step for fixing the ink after the post-treatment step.

EP 2 078 786 A2 discloses a printing method for printing non-white absorbent materials. Prior to printing a pigmented ink, the recording medium is pre-treated with a specific colourless aqueous formulation.

SUMMARY OF THE INVENTION

TECHNICAL PROBLEMS

However, great efforts are required to perform, for example, nozzle diameter change and ink adjustment.

The present invention has been made to solve the above problems in the art and has an object of providing a printing method and a printing device achieving a target ink deposition and, in dyeing and coloring, readily achieving a target color development over the whole of a printing medium containing a plurality of regions having different capillary forces from each other.

SOLUTION TO PROBLEMS

In order to achieve the above object, the printing method of the invention is a printing method having the features of claim 1.

Specifically, the flocculant is supplied with its size and amount adjusted to a sufficiently small size so that liquid droplets supplied to the region of the printing medium having a small capillary force do not unite and move from the region of the printing medium having a small capillary force. The flocculant may be regularly supplied at intervals such that the liquid droplets do not unite or supplied in liquid droplets generated using, for example, an air spray or an atomizer so as to be sufficiently small as compared with the capillary force length.

The ink containing the aggregative material may be supplied so as to gel before the flocculant supplied to the region of the printing medium having a small capillary force moves to a region of the printing medium having a great capillary force.

A deactivator for deactivating the aggregation reaction between the flocculant and the aggregative material is supplied to the region of the printing medium having a great capillary force before the flocculant is supplied.

The flocculant may be supplied only to the region of the printing medium having a small capillary force.

The aggregative material preferably contains an aqueous polymer dispersion, which is based on, for example, vinyl acetate, acrylic polyester, or urethane; a solution of an aqueous polymer such as PVA or alginic acid; or fine particles dispersed by a surfactant.

The aggregation reaction may be caused using a dispersion liquid containing an anionic surfactant as a dispersion of the aggregative material and using an organic acid as the flocculant. The aggregation reaction may be caused using a dispersion liquid containing an organic cationic polymer as the dispersion of the aggregative material and using an anionic surfactant as the flocculant, or using a dispersion liquid containing an organic anionic polymer as the dispersion of the aggregative material and using a cationic surfactant as the flocculant. The aggregation reaction may be caused using the dispersion of the aggregative material in which a hydrophobic colloid or a hydrophilic colloid is dispersed and using a neutralizer of the hydrophobic colloid or the hydrophilic colloid as the flocculant The aggregation reaction may be caused using the dispersion of the aggregative material containing a cross-linking polymer and using a cross-linking initiator for the cross-linking polymer as the flocculant.

The region of the printing medium having a small capillary force may comprise a raised texture produced by raising a base material composed of fibrous fabric. The region of the printing medium having a small capillary force may also comprise a structure that is attached to a base material composed of fibrous fabric, is composed of a resin such as polyester, and has a size not smaller than the capillary force length. The printing medium may be a nonwoven fabric, where its region having a great capillary force includes a region having a high fiber density. The printing medium may be formed of a resin material having pits that present regions having a great capillary force, and the surface of the printing medium neighboring the pits is a region having a small capillary force. The printing medium may be formed of a resin material and contain regions having different wettabilities, where a region having a great wettability may be a region having a small capillary force.

The printing device of the invention is a printing device for printing by an ink jet method on a printing medium containing a region where ink is not easily retained due to a small capillary force, the printing device comprising the features of claim 11.

As the deactivator, use may be made of, for example, an acid or an alkali, which causes a shift to a Ph region in which the aggregation reaction does not take place easily. When an organic acid is used as the flocculant and the dispersion of the aggregative material contains as a major component an anionic activator that causes aggregation in an acidic range, an alkaline agent may be used as the deactivator.

The flocculant supplier may supply the flocculant only to the region of the printing medium having a small capillary force

ADVANTAGEOUS EFFECTS OF INVENTION

The present invention enables easy dyeing of individual regions of a printing medium with a target color even where the printing medium contains a region having a small capillary force or a plurality of regions having different capillary forces from each other.

BRIEF DESCRIPTION OF DRAWINGS

[FIG. 1] FIG. 1 is a block diagram illustrating a configuration of a printing device according to Embodiment 1 of the invention.
[FIG. 2] FIGS. 2(A) and 2(B) illustrate a printing medium used in Embodiment 1.
[FIG. 3] FIG. 3 illustrates a configuration of a flocculant supplier used in a variation of Embodiment 1.
[FIG. 4] FIG. 4 illustrates a printing medium printed on by a printing device according to an embodiment not part of the present invention.
[FIG. 5] FIG. 5 illustrates how printing is performed on a printing medium used in Embodiment 2.
[FIG. 6] FIG. 6 illustrates how printing is performed on a printing medium used in a variation of Embodiment 2.
[FIG. 7] FIG. 7 illustrates how printing is performed on a printing medium used in another variation of Embodiment 2.
[FIG. 8] FIG. 8 is a block diagram illustrating a configuration of a printing device according to Embodiment 3.
[FIG. 9] FIGS. 9(A) and 9(B) illustrate the state of liquid droplets supplied to a printing medium by a flocculant supplier used in another embodiment.
[FIG. 10] FIG. 10 illustrates a configuration of an ink jet device used in yet another embodiment.
[FIG. 11] FIG. 11 is a block diagram illustrating a configuration of a printing unit used in Embodiment 6.
[FIG. 12] FIG. 12 illustrates a printing medium used in Embodiment 4.
[FIG. 13] FIG. 13 is a block diagram illustrating a configuration of a printing device according to Embodiment 4.
[FIG. 14] FIG. 14 illustrates a printing medium used in Embodiment 5.
[FIG. 15] FIG. 15 is a block diagram illustrating a configuration of a printing device according to Embodiment 5 , which is not part of the present invention.
[FIG. 16] FIG. 16 is a block diagram illustrating a configuration of a printing device according to a variation of Embodiment 5, which is not part of the present invention.
[FIG. 17] FIG. 17 is a block diagram illustrating a configuration of a printing device according to another variation of Embodiment 5, which is not part of the present invention.

DESCRIPTION OF EMBODIMENTS

The present invention is described in detail below based on the preferred embodiments shown in the accompanying drawings.

Embodiment 1

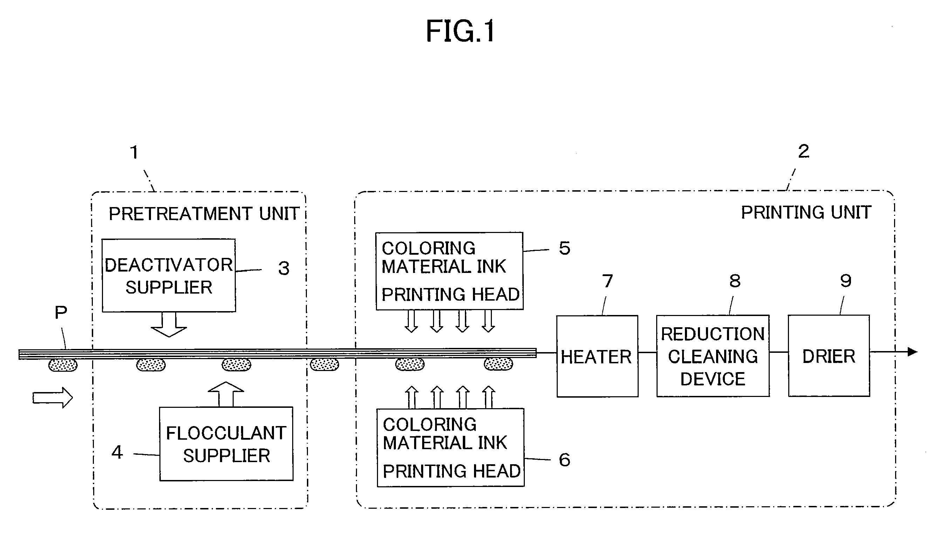

FIG. 1 illustrates a configuration of a printing device according to Embodiment 1 of the present invention. The printing device comprises a pretreatment unit 1 adapted to perform a pretreatment on a printing medium P and a printing unit 2 adapted to perform printing on the printing medium P.

The printing medium P comprises, for example, a base texture of polyester fibers having a great capillary force and hence tending to readily retain ink and fastener snaps (snaps) made of polyester that have a smaller capillary force than the base texture and tending to retain less ink than the base texture. The capillary force herein denotes an ability of each region of the printing medium P to retain ink such that a region having a great capillary force is capable of drawing ink by capillary force from neighboring regions having relatively smaller capillary forces, whereas a region having a small capillary force is incapable of holding ink with an attractive force from neighboring regions having relatively greater capillary forces.

The pretreatment unit 1 comprises a deactivator supplier 3 adapted to supply a deactivator to the printing medium P and a flocculant supplier 4 adapted to supply a flocculant to the printing medium P. The deactivator herein is used to deactivate the flocculant and preclude aggregation reaction between flocculant and aggregative material; the flocculant and the aggregative material react upon contacting each other to aggregate and thereby increase in viscosity (gel).

The deactivator supplier 3 is located on the reverse surface side of the printing medium P not provided with snaps and supplies a deactivator to the base texture of the printing medium P by, for example, ink jet method.

The flocculant supplier 4 is located on the front surface side of the printing medium P, where the snaps are arranged, to supply a flocculant to the front surface side of the printing medium P.

The flocculant is supplied by the flocculant supplier 4 under supply conditions that are so selected as to achieve a supply density and a size such that the individual liquid droplets on the surfaces of the snaps have a size sufficiently smaller than both the capillary force length as defined by the above equation (2) and the radius of curvature of the surfaces of the snaps. Thus, the flocculant can be retained in a position to which it is supplied and be kept from moving to the base texture of the printing medium P.

The flocculant is adjusted to a size not larger than 10 $\mu$m, for example. The flocculant supplier 4 may be constituted using, for example, an ultrasonic nebulizer or an air spray for supplying the flocculant in the form of mist of which the particles have a size of about several micrometers to tens of micrometers. Alternatively, an ink jet method may be used to print with intervals to preclude the flocculant from uniting.

Downstream of the pretreatment unit 1 in the moving direction of the printing medium P is provided the printing unit 2. The printing unit 2 comprises printing heads 5 and 6, a heater 7, a reduction cleaning device 8, and a dryer 9 located in sequence down the moving direction of the printing medium P.

The printing head 5 is located on the reverse surface side of the printing medium P and shoots ink droplets at the base texture by an ink jet method. The printing head 6 is located on the front surface side of the printing medium P and shoots ink containing the aggregative material at the printing medium P. In order to dye, for example, polyester fibers, this embodiment uses a disperse dye as dyeing color material, and the disperse dye is blended with the aggregative material to prepare ink for use in ink jet printing. The ink containing the aggregative material and supplied from the printing head 6 to the snaps gels as the aggregative material and the flocculant undergo the aggregation reaction and is retained on the surfaces of the snaps. The ink containing the aggregative material and supplied from the printing head 6 to the base texture does not gel and is allowed to penetrate the base texture because the flocculant is previously deactivated by a deactivator and hence the aggregative material and the flocculant do not undergo the aggregation reaction. Accordingly, the ink printed on the base texture reaches the reverse surface by penetration, and enables uniform printing on both the front and the reverse side. To help the ink penetrate and reach the reverse surface, a penetrant composed of a dispersion liquid not containing any coloring material may be printed in an amount required.

The heater applies heating treatment to the printing medium P to vaporize (sublimate) the disperse dye contained in the ink allowed to penetrate the base texture and the ink retained in a gelatinous state on the snaps, thus dyeing the printing medium P. The reduction cleaning device 8 cleans the dyed printing medium P. The dryer 9 dries the cleaned printing medium P to complete the process.

Next, the operation of the printing device illustrated in FIG. 1 will be described.

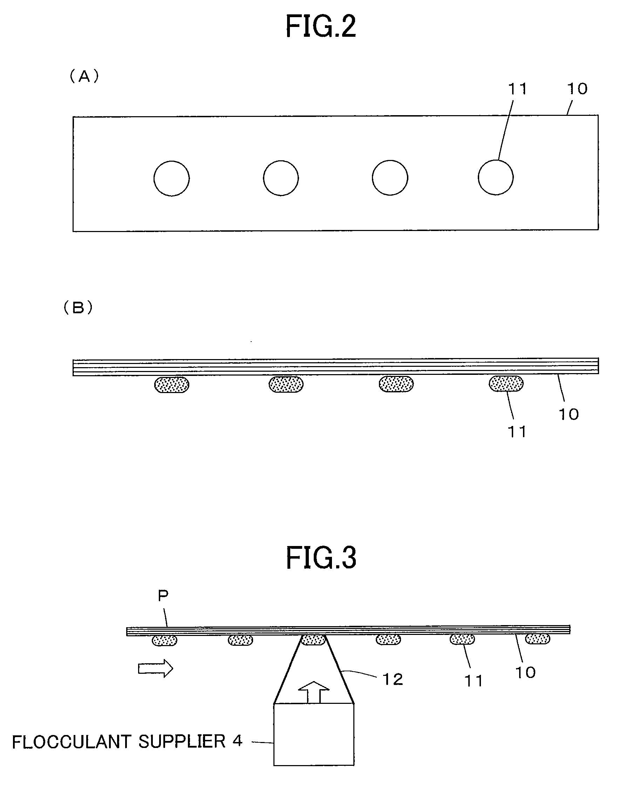

First, as illustrated in FIG. 1, the printing medium P is moved in a given direction by a moving device, not shown. The printing medium P has snaps 11 having a small capillary force and attached to a base texture 10 having a great capillary force as illustrated in FIGS. 2(A) and 2(B) by way of example. Because the printing medium P thus has the base texture 10 and the snaps 11 adjacent to each other, shooting ink droplets at the snaps 11 would allow the ink to move to the base texture 10 because of the difference in capillary force, making it difficult to dye the snaps 11 with a given amount of ink.

When the printing medium P is moved to reach the deactivator supplier 3 provided in the pretreatment unit 1, the deactivator supplier 3 supplies the deactivator to the base texture 10 from reverse surface side of the printing medium P. The supplied deactivator penetrates the base texture 10 through to its front surface side but does not reach the snaps, which have a small capillary force.

When the printing medium P supplied with the deactivator moves from the deactivator supplier 3 to reach the flocculant supplier 4, the flocculant supplier 4 supplies a mist of flocculant from the front surface side of the printing medium P. Because the flocculant supplier 63 supplies the flocculant with the size and amount thereof so adjusted that the droplets of the flocculant supplied to the snaps 11 do not unite, hence do not move to the base texture 10, which has a great capillary force, and can be retained on the snaps 11.

Subsequently, the printing medium P moves to the printing unit 2, where the printing heads 5 and 6 shoot ink droplets at the printing medium P. The ink droplets ejected from the printing head 5 are supplied to the base texture 10 from the reverse surface side of the printing medium P and penetrate the base texture 10. The ink droplets containing the aggregative material and ejected from the printing head 6 are supplied to the snaps 11 and the base texture 10 from the front surface side of the printing medium P. The ink containing the aggregative material and supplied to the snaps 11 gels through the aggregation reaction between the aggregative material and the flocculant existing on the surfaces of the snaps 11. Thus, the ink is retained on the surfaces of the snaps 11 by gelling. The ink containing the aggregative material and supplied to the base texture 10 is allowed to penetrate the base texture without gelling and remaining on the base texture because the deactivator supplied from the deactivator supplier 3 to the base texture 10 prevents the aggregation reaction between the aggregative material and the flocculant.

Thus, by gelling the ink, a given amount of the ink supplied to the snaps 11 can be kept from moving to the base texture 10 and retained.

Then, the printing medium P, with the ink retained on the snaps 11 by gelation, undergoes the heating treatment by the heater 7. The ink supplied to the base texture 10 vaporizes through the heating treatment, allowing the dye in the ink to dye the base texture 10. The ink supplied to the snaps 11 and caused to gel likewise vaporizes through heating treatment, allowing the dye in the ink to dye the snaps 11. The printing medium P on which the dye in the ink has been fixed by heating is cleaned by the reduction cleaning device 8 and dried by the dryer 9 to complete dyeing of the printing medium P.

Where, for example, the snaps 11 are composed of polyester, the dye is fixed onto the printing medium P by heating at 180 to 200°C by the heater 7, whereupon the reduction cleaning device 8 cleans the printing medium P with heated alkaline water, and the dryer 9 dries the printing medium P to complete the process.

The printing device according to this embodiment enables the printing medium P containing a region having a small capillary force to be dyed with a target color merely by causing a given amount of ink to gel and thereby be retained in the region having a small capillary force.

The flocculant supplier 4 may supply the flocculant only to the snaps 11 of the printing medium P. As illustrated in FIG. 3, for example, the flocculant supplier 4 may have a configuration provided with a cover 12 adapted to cover the outer periphery of each of the snaps 11 so as to supply a mist of the flocculant only to the snaps 11. Alternatively, the flocculant supplier 4 may be adapted to achieve the supply of the flocculant only to the snaps 11 by adjusting the flocculant supply direction. The printing head 6 may have a configuration adapted to supply the ink containing the aggregative material only to the snaps 11 of the printing medium P. This enables the gelled ink to be retained only on the snaps 11 without the need to supply the deactivator to the base texture 10 of the printing medium P.

Where the ink that has gelled through the aggregation reaction between aggregative material and flocculant may be retained on the base texture 10 of the printing medium P without affecting the dyeing of the printing medium P, the deactivator supplier 3 need not supply the deactivator to the base texture 10 of the printing medium P. The flocculant and the ink containing the aggregative material are supplied from the front side of the printing medium P, and the gelatinous ink is retained on the base texture 10 and the snaps 11. The ink is thereafter subjected to the heating treatment by the heater 7 to vaporize the gelled ink to achieve dyeing of the base texture 10 and the snaps 11 with the dye of the ink.

The printing head 5 need not supply the ink when the ink supplied from the printing head 6 can dye the base texture 10 of the printing medium P with a target color.

The deactivator supplier 3 may be located on the reverse surface side of the printing medium P, between the flocculant supplier 4 and the printing head 6. The deactivator is supplied to the base texture 10 after the flocculant is supplied to the printing medium P to deactivate the flocculant.

The deactivator supplier 3 may be located on the front surface side of the printing medium P on the condition that the supplied deactivator can deactivate the flocculant supplied to the base texture.

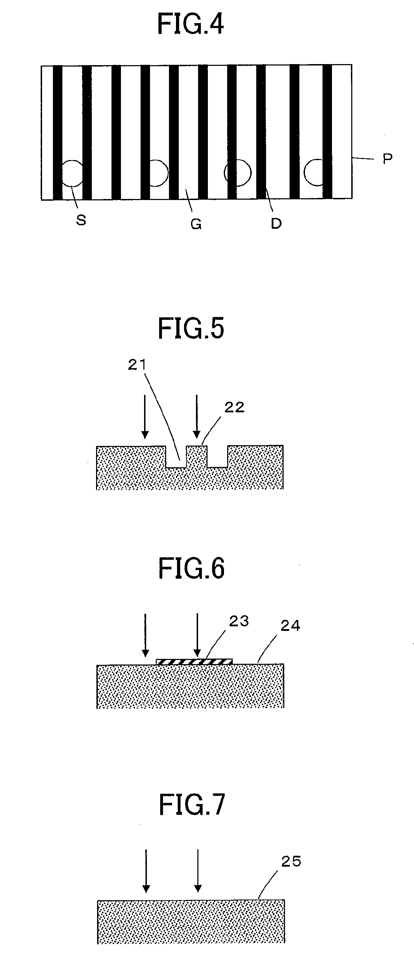

In this embodiment, a case where uniform dyeing of the whole of the base texture and the snaps is achieved is described. Accordingly, penetration phenomenon is used to dye both the front and the reverse side evenly. On the other hand, continuous design printing D on a part of a base texture G and snaps S as illustrated in FIG. 4 requires not only coloring a part of the snaps S with a target color but preventing bleeding (penetration) of the ink shot at a part of the base texture G to retain the ink where it is deposited. In this case, which is not part of the present invention, supplying the flocculant over the whole surface instead of using the deactivator is effective. Because the ink droplets supplied to the base texture G also react with the flocculant, the ink droplets aggregate and gel after deposition so as to be retained where they are deposited without bleeding that might otherwise be caused by penetration.

Further, because penetration of the ink deposited on the reverse surface by the printing head 5 can be precluded by supplying the flocculant also to the reverse surface, different design printing can be achieved on the front and the reverse side. In this case, the ink can be caused to aggregate before reaching the reverse surface by penetration by reducing the ink droplets to a sufficiently small size in comparison with the thickness of the fabric.

Thus, ink bleeding in the base texture and ink penetration through to the reverse surface can be controlled by controlling the supply and non-supply of the deactivator, and thus different color developments can be achieved.

Embodiment 2

The printing medium P used in Embodiment 1 may be a resin sheet material containing regions having different capillary forces.

An example thereof is the printing medium P having pits 21 formed in a resin sheet as illustrated in Fig. 5. Formation of the pits 21 creates a difference in capillary force between the pits 21 and neighboring projections 22, so that ink supplied to the projections 22 tends to move to neighboring pits 21. Thus, the printing medium P comprises the pits 21 having a great capillary force and the projections 22 having a small capillary force. The edge portions on both sides of each pit 21 as seen in the drawing have a greater capillary force than the central portion of the pit and tend to gather ink droplets. First, the flocculant supplier 4 supplies the flocculant to the printing medium P. Because the flocculant is supplied in a droplet size that is sufficiently smaller than the capillary force length, use may be made of an ultrasonic nebulizer, for example. Subsequently, the printing head 6 supplies the ink containing the aggregative material to the pits 21 and the neighboring projections 22 of the printing medium P. On the projections 22, the flocculant and the aggregative material contained in the ink undergo the aggregation reaction and gel. Thus, the ink is retained on the projections 22 by gelling. The ink printed on the central portions of the pits 21 is also retained by virtue of the aggregation reaction in a position where it is deposited instead of moving to the edge portions, thus achieving uniform printing. The printing medium P undergoes the heating treatment by the heater 7, whereby the ink retained in the pits 21 and on the projections 22 of the printing medium P vaporizes to accomplish dyeing thereof.

Use may be made of a printing medium P such, for example, that regions having different wettabilities are formed on a resin sheet and a region having a great wettability has a small capillary force. Such a printing medium P is exemplified by one illustrated in Fig. 6, wherein a part of a resin sheet is subjected to matting treatment to reduce the wettability, so that the printing medium P comprises a matted region 23 having a great capillary force and a surface 24 of the resin sheet having a small capillary force. The flocculant supplier 4 supplies the flocculant to the printing medium P. Subsequently, the printing head 6 supplies the ink containing the aggregative material to the matted region 23 and the neighboring surface 24 of the printing medium P. On the surface 24, the flocculant and the aggregative material contained in the ink undergo the aggregation reaction and gel. Thus, the ink is retained on the surface 24 by gelling. The printing medium P undergoes the heating treatment by the heater 7, whereby the ink retained on the matted region 23 and the surface 24 of the printing medium P vaporizes to accomplish dyeing thereof with the dye.

Further, use may be made, for example, of a resin material having a large, flat surface 25 as illustrated in Fig. 7 as the printing medium P. On the resin sheet having the large surface 25, the ink moves so easily that a slight difference in capillary force on the surface 25 of the resin material causes the ink to move to and gather in one portion, making it difficult to dye the whole of the surface 25 uniformly. The whole of the surface 25 of the printing medium P is supplied with the flocculant and the ink containing the aggregative material to cause gelation. Subsequently, the printing medium P on which the ink has been retained by virtue of gelation is subjected to the heating treatment to achieve uniform dyeing of the whole of the surface 25 of the printing medium P.

The printing device according to this embodiment enables also a resin material comprising regions having different capillary forces from each other to be readily dyed with a target color merely by retaining the ink by virtue of gelation.

The inks ejected from the printing heads 5 and 6 described above are of a type that is sublimated and transferred onto the printing medium P through the heating treatment by the heater 7 but the invention is not limited thereto.

For example, use may be made of an ink of which a polymer component forms a film as the dispersion medium vaporizes. Use may be made of an ink employing, as the polymer component, an aqueous polymer, which is, for example, acrylic-based or polyester-based, and dispersed together with a coloring material. Further, use may be made of an ink containing a component that forms a film upon hardening when exposed to irradiation of energy such as heat and light thereby to adhere the coloring material to the printing medium P. The coloring material may be adhered to the printing medium P by first supplying the printing medium P with an ink containing, for example, urethane acrylate or epoxy acrylate as film-forming component, thereafter applying heating treatment to the printing medium P and irradiating the printing medium P with ultraviolet light or other like energy to cause the film-forming component to form a film through radical polymerization. Alternatively, the coloring material may be adhered to the printing medium P by first supplying the printing medium P with an ink containing, for example, epoxy resin prepolymer or urethane prepolymer as film-forming component, thereafter applying heating treatment to the printing medium P and causing the film-forming component to form a film through a reaction.

Alternatively, use may be made of an ink containing nano-metallic particles that form a film when subjected to heating treatment. Subjecting the printing medium P to heating treatment after supplying the printing medium P with the ink causes the nano-metallic particles contained in the ink to form a film on the printing medium P and thus provide a metallic layer on the surface of the printing medium P.

Embodiment 3

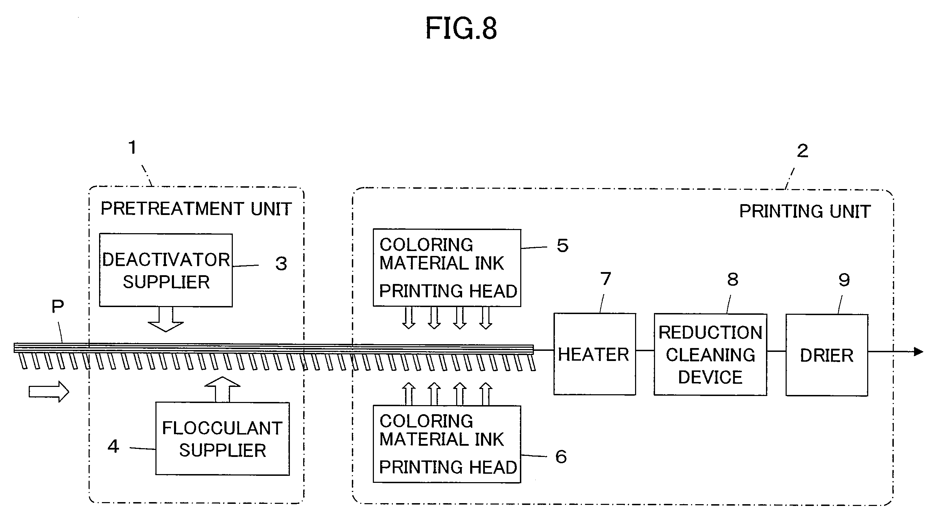

The printing medium P used in Embodiment 1 may be a raised fabric comprising a base texture having a great capillary force and a raised texture having a small capillary force as illustrated in FIG. 8. First, the deactivator supplier 3 supplies the deactivator to the base texture from the reverse surface side of the printing medium P. The supplied deactivator penetrates through to the front surface of the base texture. Next, the flocculant supplier 4 supplies a mist of flocculant from the front side of the printing medium P. Because the flocculant supplier 4 supplies the flocculant with the dimensions and amount adjusted, the flocculant is supplied to the raised fabric in such size and at such intervals that the droplets thereof do not unite.

Subsequently, the printing heads 5 and 6 shoot ink droplets at the printing medium P. The ink droplets ejected from the printing head 5 are supplied to the base texture from the reverse surface side of the printing medium P and penetrate the base texture. The droplets of the ink containing the aggregative material and ejected from the printing head 6 are supplied to the front surface side of the printing medium P. Upon supply of the ink containing the aggregative material, the aggregative material undergoes the aggregation reaction with the flocculant existing on the surface of the raised fabric, causing gelation. Thus, the ink is retained on the raised portion of the raised fabric by gelling. When the ink and the flocculant have moved from the raised fabric to the base texture, the deactivator supplied from the deactivator supplier 3 to the base texture prevents the aggregation reaction between them from occurring, so that the ink does not gel and remain on the base texture.

Where the disperse dye employed in Embodiment 1 is used as a coloring material, the printing medium P is subjected to the heating treatment by the heater 7 as in Embodiment 1, and the ink supplied to the base texture vaporizes through the heating treatment, allowing the dye in the ink to dye the base texture, while the ink supplied to the raised fabric and caused to gel vaporizes, so that the dye contained in the ink dyes the raised fabric. An acid dye may be used as coloring material in place of disperse dye to dye a printing medium composed of, for example, nylon or wool; alternatively, a reactive dye may be used to dye a printing medium composed of cotton. In this case, steam treatment is preferably used instead of the heating treatment.

Using such a coloring material, the part of the raised portion closer to the top thereof may be colored with the coloring material of the ink supplied by the printing head 6 from the front side, while the part of the raised portion closer to the base texture may be colored with the coloring material of the ink supplied by the printing head 5 from the reverse side. The coloring degree may be varied between the top part and the root part of the raised portion by controlling the respective printing coloring materials used for the front and the reverse side.

The printing device according to this embodiment enables also a raised fabric containing regions having different capillary forces from each other to be readily dyed with a target color merely by retaining the ink by virtue of gelation.

Embodiment 4

As the printing medium P employed in Embodiment 1, use may be made of a nonwoven fabric where a number of resin fibers such as of polypropylene are randomly disposed in planar arrangement.

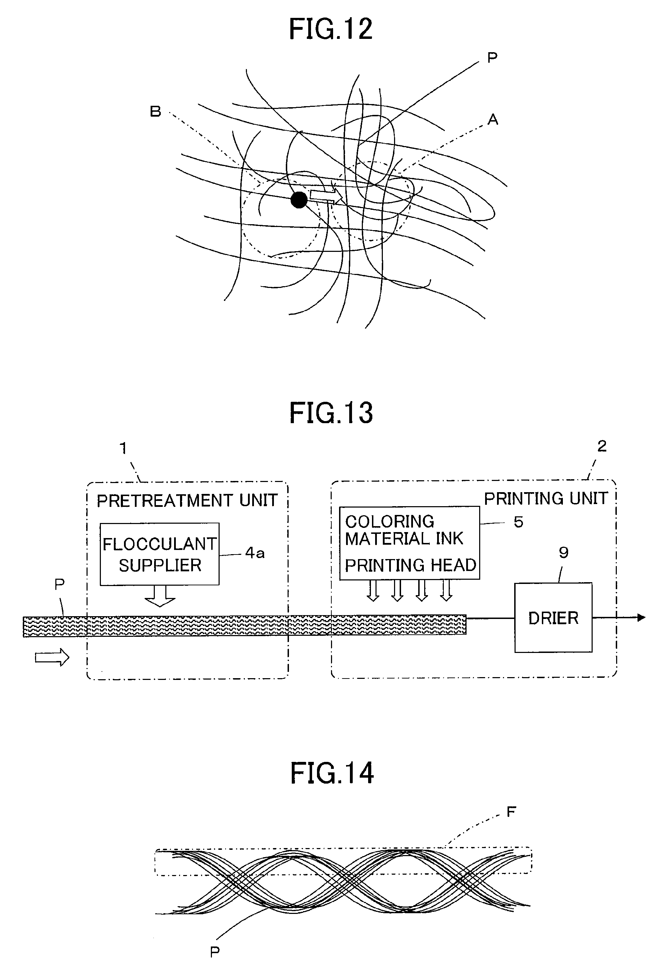

Generally, a nonwoven fabric mixedly contains a region A where fibers are located at a high density and a region B where fibers are located at a low density, presenting a variation in fiber density as illustrated in FIG. 12. The region A having a high fiber density is affected more by the surface tension of the fibers than the region B having a lower fiber density and has an increased capillary force. When the printing medium P is printed on by an ink jet method, an ink droplet deposited in the region B having a lower fiber density moves to the region A having a high fiber density as illustrated in FIG. 12. A droplet deposited on a single fiber does not remain in the deposition position and moves to a nearby position where fibers intersect, i.e., a position having a higher capillary force than the single fiber, tending to cause inconsistency in dyeing density.

FIG. 13 illustrates a configuration of the printing device according to Embodiment 4. As compared with the printing device according to Embodiment 1 illustrated in FIG. 1, the printing device according to Embodiment 4 comprises a flocculant supplier 4a on the front surface side of the printing medium P in lieu of the flocculant supplier 4 while the deactivator supplier 3, the printing head 6, the heater 7, and the reduction cleaning device 8 are omitted. First, the flocculant supplier 4a of the pretreatment unit 1 supplies the flocculant onto the fibers of the printing medium P. As the flocculant, a cationic polymer, for example, is used. The flocculant supplied to the printing medium P is preferably supplied in droplets smaller than the capillary force length and having a size not greater than the diameter of fibers so that the flocculant supplied to the printing medium P is supplied uniformly to the fibers. For that purpose, an ultrasonic nebulizer or an air spray device, for example, may be used.

Subsequently, the printing medium P is moved to the printing unit 2, where the printing head 5 shoots ink droplets at the printing medium P. The ink used may be prepared by, for example, dispersing a pigment and an aqueous polymer in an aqueous dispersion medium containing an anionic surfactant. Particles of the pigment and the aqueous polymer are dispersed in the aqueous dispersion medium in a stable state such that they are negatively charged by the anionic surfactant. As the aqueous polymer for ink, use may be made of a polymer including polyolefin, polyurethane, acrylic, and polyester.

Thus, the ink droplets deposited in the region A having a high fiber density or the region B having a low fiber density of the printing medium P gel as
the aqueous polymer in the ink undergoes the aggregation reaction with the cationic polymer existing on the fibers of the printing medium P, and are retained in the region where they were deposited. Printing may also be so made that more ink is retained on the printing surface of the printing medium P.

After printing, the ink aggregated on the fibers of the printing medium P is dried by the drier 9 to cause the aqueous polymer in the ink to form a film, so that a film of the colored polymer that has incorporated the pigment is formed on the fibers of the printing medium P. When the ink is thus caused to form a film on the fibers of the printing medium P, the cleaning treatment need not be thereafter performed, and mere drying treatment by the drier 9 suffices to cause a printing image to be formed on the printing medium P.

In order to enhance the adhesion between polypropylene, which is a material used in most nonwoven fabrics, and aqueous polymer, the printing medium P is preferably activated previously by, for example, corona treatment or plasma treatment before the flocculant supplier 4a supplies the flocculant.

Embodiment 5

As the printing medium P, use may be made of a printing medium, such as a woven or knitted fabric, composed of bundles of fibers such that regions having a great capillary force extend through the printing medium from the front surface to the reverse surface as illustrated in FIG. 14. For example, use may be made of a woven fabric or a knitted fabric composed of yarns made of bundles of fibers, each bundle of fibers being in turn composed of, for example, a plurality of polyester fibers, nylon fibers, or cellulose fibers having a diameter of 10 $\mu$m to 20 $\mu$m.

Such yarns composed of bundles of fibers, containing gaps of several microns to tens of microns between fibers, have a great capillary force. Therefore, the ink droplets deposited on a printing medium penetrate and move, without halting, along the bundles of fibers and permeate through to the reverse surface, and hence printing only on a given front surface region F as illustrated in FIG. 14 by ink jet method was difficult.

Further, a woven or a knitted fabric used in the field of textiles may be required to have an interior (reverse surface region of the printing medium) closer to the skin and an exterior (front surface region of the printing medium) facing the outside that have different functions from each other. For example, the interior is required to have a function of, for instance, absorbing water content of sweat and releasing heat through reaction with the water content, whereas the exterior is required to have, for instance, a water-proofing function of blocking, for example, rain or a water-repelling function whereby the moisture in the fabric is not observable as smear. In order to provide the front surface region and the reverse surface region of the printing medium with different physical properties, the insides of the bundles of fibers need to be sufficiently impregnated with treatment agents so that the treatment agents are adhered to the fibers in the corresponding regions, the treatment agents being exemplified by an antistatic agent for preventing electrification of the printing medium, a hydrophilizing treatment agent for enhancing the water adsorption capability of fibers, and a water repellent for enhancing the water repellency of fibers.

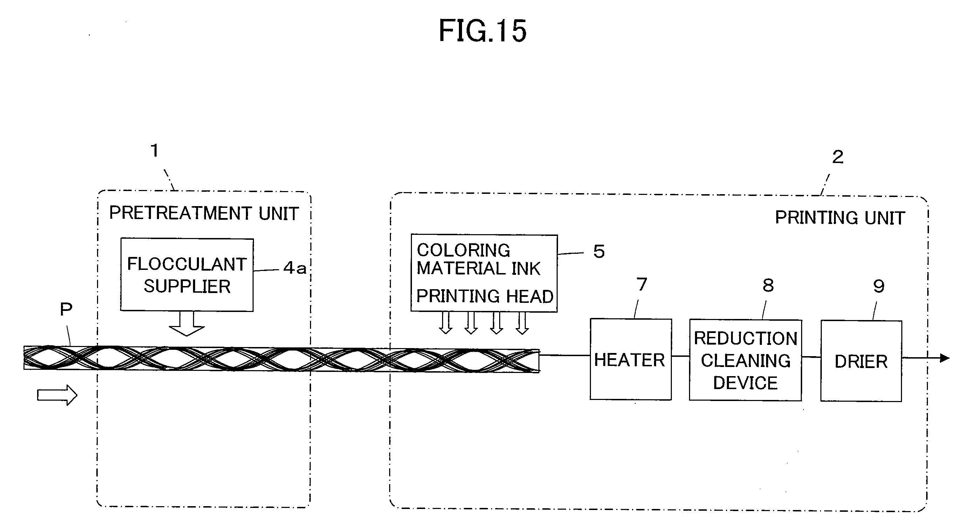

FIG. 15 illustrates a configuration of the printing device according to Embodiment 5, which is not part of the present invention. As compared with the printing device according to Embodiment 1 illustrated in FIG. 1, the printing device according to Embodiment 5 comprises a flocculant supplier 4a on the front surface side of the printing medium P in lieu of the flocculant supplier 4, while the deactivator supplier 3 and the printing head 6 are not included.

First, the flocculant supplier 4a of the pretreatment unit 1 supplies the flocculant to the front surface of the printing medium P. Subsequently, the printing medium P is moved to the printing unit 2, where the printing head 5 shoots ink droplets containing the aggregative material and the treatment agents adapted to convert the physical properties of the printing medium P to the front surface of the printing medium P by an ink jet method. Adjustments are made so that the treatment agents are supplied in an amount equivalent to 10% to 150% by weight of the printing medium, preferably in an amount equivalent to several tens of percent by weight of the printing medium. Some of the treatment agents not only have the function of converting the physical properties of the printing medium P but act as the aggregative material. When a treatment agent used also has a function of aggregative material, droplets of ink need not contain the aggregative material.

The ink droplets shot from the printing head 5 are deposited on the printing medium P, then penetrate into the inside of the bundles of fibers in the front surface region F of the printing surface, and the aggregative material in the ink undergoes the aggregation reaction with the flocculant previously supplied to the printing medium P and gel, so that the ink containing the treatment agents does not penetrate through to the reverse surface but is retained in the front surface region F. The ink containing the treatment agents may be caused to penetrate the printing medium P by an appropriate depth from the surface of the printing medium P by controlling the aggregation reaction rate by changing, for example, the concentration of the flocculant or the aggregative material. Thus, the ink containing the treatment agents can be caused to adhere to the given front surface region F by controlling the position and the depth of penetration of the ink containing the treatment agents in the printing medium P.

Subsequently, the printing medium P undergoes the heating treatment by the heater 7, the cleaning treatment by the reduction cleaning device 8, and the drying treatment by the drier 9. The front surface region F of the printing medium P is thus dyed, while desired functions can be provided by the effects of the treatment agents.

The treatment agents for providing the bundles of fibers of the printing medium P with such functions include a treatment agent acting as antistatic agent prepared by adding, for example, a surfactant to an aqueous solution of an aqueous polymer such as of polyvinyl alcohol, aqueous polyester, or aqueous acrylic; and, as water repellent, an aqueous dispersion containing water-repellent particles such as of fluororesin, silicone resin, and wax. After adhering to the printing medium P, the water repellent is caused to form a film by the drying and the heating treatment and, where, for example, a cross-linker is contained, firmly adheres to the fiber surface by virtue of cross-linking reaction, performing a water-repelling function over an extended period of time. Where the water-repellent particle dispersion itself does not function as aggregative material, aqueous polyester or aqueous acrylic, for example, may be added as aggregative material to provide a function of being aggregated.

While, in this embodiment, the flocculant is supplied from the flocculant supplier 4a and the ink droplets are shot from the printing head 5 toward the front surface of the printing medium P; the flocculant supplier and the printing head may be provided on the reverse surface side of the printing medium P to supply the flocculant to and shoot droplets of the ink containing the aggregative material and the treatment agents at the reverse surface of the printing medium P. Likewise, the ink penetration region by which the ink penetrates the printing medium P from the reverse surface toward the front surface may be controlled by changing, for example, the concentration of the flocculant or the aggregative material so as to enable a given reverse surface region of the printing medium P to be dyed and desired functions to be provided.

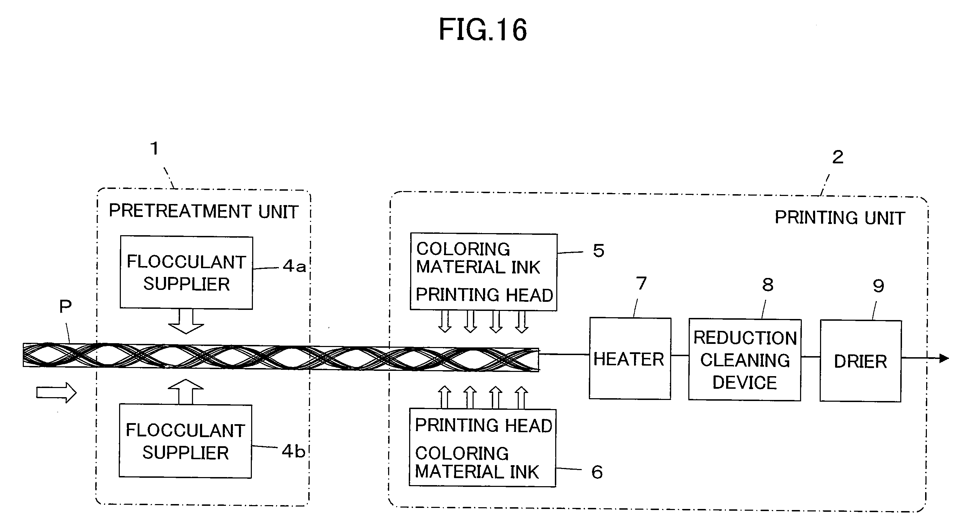

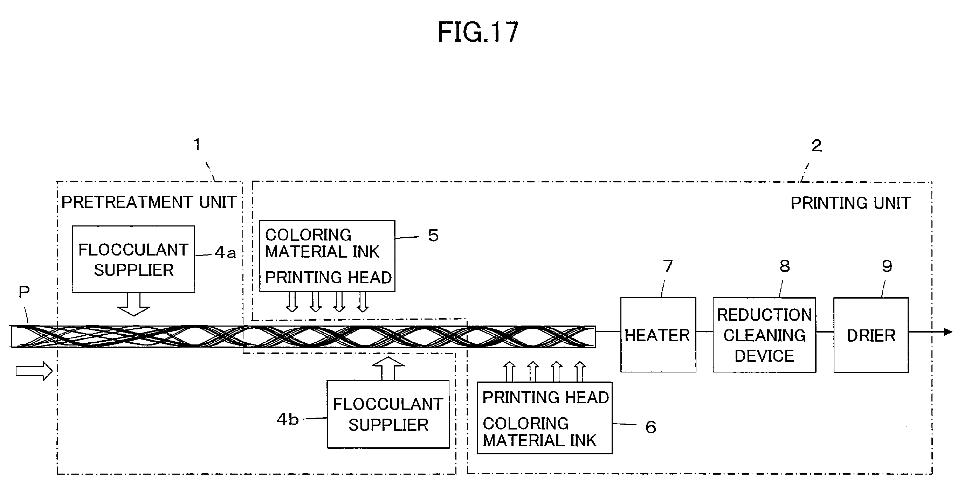

Further, the front surface region and the reverse surface region of the printing medium P may be supplied respectively with inks containing different kinds of, for example, treatment agents and pigments. For example, the flocculant supplier 4a and a flocculant supplier 4b may be provided respectively on the front surface side and the reverse surface side of the printing medium P while the printing heads 5 and 6 may be provided respectively on the front surface side and the reverse surface side of the printing medium P as illustrated in FIG. 16, so that after the flocculants are supplied to the front surface and the reverse surface of the printing medium P, droplets of the inks containing the aggregative material and the treatment agents are shot respectively at the front surface and the reverse surface of the printing medium P. Thus, the front surface region and the reverse surface region of the printing medium P can be dyed with different coloring materials and provided with different functions. Further, an arrangement as illustrated in FIG. 17 may be used where the flocculant supplier 4a and the printing head 5 are provided on the front surface side of the printing medium P while, downstream thereof, the flocculant supplier 4b and the printing head 6 are provided on the reverse surface side of the printing medium P. Thus, after the flocculant is supplied to, and the ink droplets are shot at, the front surface of the printing medium P, the flocculant is supplied to, and the ink droplets are shot at, the reverse surface of the printing medium P. Another arrangement may be used where the flocculant supplier 4b and the printing head 6 are provided on the reverse surface side of the printing medium P while, downstream thereof, the flocculant supplier 4a and the printing head 5 are provided on the front surface side of the printing medium P.

For the aggregation reaction in Embodiments 1 to 5, use may be made of a dispersion liquid containing an anionic surfactant as a dispersion liquid in which the aggregative material is dispersed (the dispersion of the aggregative material) and an acid as the flocculant. The anionic surfactant is dispersed in a state adjusted to be neutral or alkaline, but when added with an organic acid as flocculant to take on acidity, aggregates as its degree of dissociation decreases. In the process, the aqueous polymer contained in the flocculant aggregates and gels. The anionic surfactant that may be used include fatty acid sodium, monoalkyl sulfate salt, alkyl polyoxyethylene sulfate salt, alkyl benzen sulfonate salt, and monoalkyl phosphate salt; the acids that may be used include organic acids such as malonic acid, citric acid, and acetic acid, and inorganic acids such as dilute hydrochloric acid. The deactivator that may be used include alkaline agents that restrain acidification caused by organic acid, such as sodium carbonate, sodium hydrogencarbonate, and sodium hydroxide.

For the aggregation reaction, use may be made of a reaction between the dispersion of the aggregative material dispersively stabilized by an anionic surfactant and a flocculant composed of an organic cationic polymer or a reaction between the dispersion of the aggregative material dispersively stabilized by a cationic surfactant and a flocculant composed of an organic anionic polymer. For example, an anionic surfactant is dispersed with negative charge and, upon addition of an organic cationic polymer as flocculant, has its charge neutralized, aggregates, and gels.

The cationic polymers that may be used as the flocculant include a compound comprising an amino group ($-NH_2$) such as ammonia and alkylamine and a compound containing more nitrogen exemplified by a compound comprising a guanidino group or a biguanide group such as arginine, guanidine, or a biguanide derivative. As the polymer having an amino group or an imino group on a side chain or a main chain, use may be made of, for example, synthetic polymers such as polyethylene imine, polyvinylamine, and polyallylamine; and aqueous polymers containing a polyamino acid such as polyornithine and polylysine. Use may be made of an N,N-dimethylaminoethyl acrylate-based copolymer obtained by copolymerizing acrylamide and N,N-dimethylaminoethyl methacrylate or N,N-dimethylaminoethyl acrylate monomer, a polyvinyl amidine-based polymer, or an amphoteric polymer. The stabilized anionic surfactant used as the aggregative material may be, for example, a surfactant obtained by partial hydrolysis of polyacrylamide or copolymerization of acrylamide and sodium acrylate.

For the aggregation reaction, use may be made of a treatment method using lignin sulfonic acid and inorganic aggregative material as described in JP 0879782 B, a method using both a product of initial condensation of a phenol and an aldehyde and inorganic aggregative material in the presence of an alkaline substance as described in JP 0946869 B, a method using both an organic substance having a phenolic hydroxyl and organic or inorganic aggregative material as described in JP 1125326 B, a treatment method using tannin and tannic acid as described in JP 57-019084 A, or a treatment method using lignin sulfonic acid as well as inorganic aggregative material and cationic polymeric aggregative material as described in JP 60-238193 A. In the process, the aqueous polymer contained in the aggregative material is caused to aggregate and gel.

For the aggregation reaction, coagulation may be used. When particles of a hydrophobic colloid or a hydrophilic colloid that diffuse as the particles assume the same electric sign and repel each other in the dispersion of the aggregative material are added with a flocculant composed of a neutralizer (electrolyte or alcohol) having a sign opposite to that of the colloidal particles, the colloidal particles are electrically neutralized, and the repulsion between the colloidal particles dissolves, allowing aggregation to occur. In the process, the colloidal particles are caused to aggregate and gel. As the hydrophobic colloid and the hydrophilic colloid, use may be made of, for example, an aluminum salt (aluminum sulfate, polyaluminum chloride) or an iron salt (polyferric sulfate, ferric chloride). The aggregation reaction may also be caused using the aggregative material containing a hydrophobic colloid or a hydrophilic colloid dispersed in the dispersion of the aggregative material and using a neutralizer of the hydrophobic colloid or the hydrophilic colloid as the flocculant.

In the aggregation reaction, the viscosity of the ink may be increased using a cross-linking reaction employing the dispersion of the aggregative material containing a cross-linking polymer (monomer, olygomer) and a flocculant composed of a cross-linking initiator. For example, use may be made of a cross-linking reaction using a polyvinyl alcohol (PVA) resin solution and boric acid, a urethane resin-based reaction in which a chemical reaction is caused by mixing polyol having a hydroxyl at an end, a urethane pre-polymer having an isocyanate group at an end, and polyol, or an epoxy resin-based reaction in which a reaction is caused in epoxy resin prepolymer using a hardener such as amine. The aggregation reaction may be caused using the aggregative material containing a cross-linking polymer dispersed in the dispersion of the aggregative material and a cross-linking initiator for the cross-linking polymer as the flocculant.

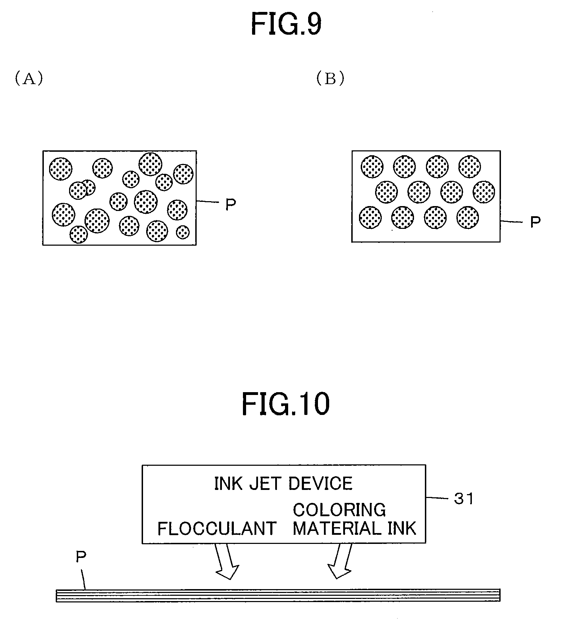

As the flocculant suppliers used in Embodiments 1 to 5, one may select flocculant suppliers capable of supplying the flocculant in a size that is not greater than the capillary force length and the radius of curvature of the printing medium. The liquid droplets are supplied with the size so adjusted using a device as exemplified by an ultrasonic nebulizer and an air spray capable of generating fine droplets that the deposited liquid droplets, including ones that have united, remain in their deposition positions as illustrated in FIG. 9(A). Use may also be made of a supply method whereby the size and the positions of the liquid droplets are controlled using, for example, an ink jet method or an application method using a gravure roller as illustrated in FIG. 9(B).

Further, instead of the flocculant suppliers and the printing heads used in Embodiments 1 to 5, use may be made of an ink jet device that prints the flocculant and the ink containing the aggregative material substantially at the same time so as to achieve deposition of the ink containing the aggregative material while the flocculant is being retained in the deposition position. Use of an ink jet device 31 as illustrated in FIG. 10 in which the printing heads for the flocculant and the coloring material ink are disposed in mutual proximity or integrally provided enables the deposition positions and timings to coincide, achieving gelation in a shorter time than the time it takes the liquid droplets to move. Thus, the flocculant or the ink containing the aggregative material can remain in the deposition position instead of moving from the deposition position to a region having a great capillary force.

Embodiment 6

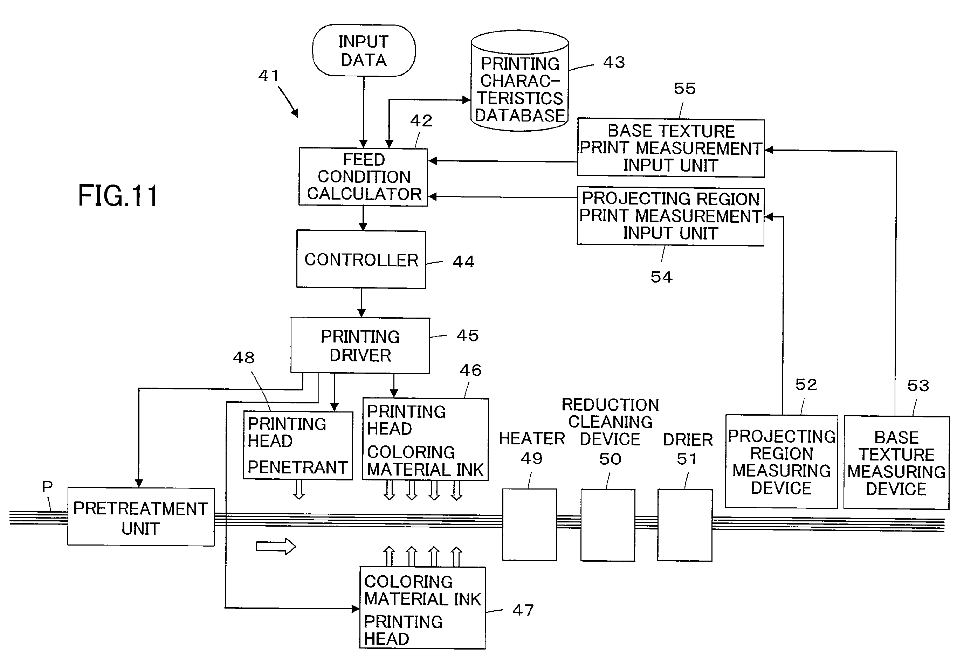

As illustrated in Fig. 11, the printing unit used in any of the printing devices according to Embodiments 1 to 5 may have a configuration such that the printing unit prints on the individual regions of the printing medium P based on the input data and feeds back the results of printing on the printing medium P to enable corrections and achieve development of a target color.

A printing unit 41 in this embodiment comprises a feed condition calculator 42, a printing characteristics database (DB) 43, a controller 44, a printing driver 45, and printing heads 46 to 48.

An operator enters in the feed condition calculator 42 information on the printing medium P containing a plurality of regions having different color development characteristics from each other (e.g., a region of base texture and a region of raised texture) and information on target reproduced colors of a print image to be printed on the printing medium P as input data. The information on the printing medium P includes material and thickness, inclusion or omission of the aggregative material and the flocculant, and kind and amount of the aggregative material and the flocculant, each separately for the individual regions of the printing medium. The information on the target reproduced colors includes information on, for example, chromaticities of the target reproduced colors, color bleeding (spatial frequency), and the degree of uniformity between the front and the reverse side in the respective regions of the printing medium P and pixels.

The feed condition calculator 42 is connected to the printing characteristics database 43. The feed condition calculator 42 uses the information on the printing medium P and the information on the target reproduced colors to search the printing characteristics database 43 to select the kinds of inks, ink feed parameters, penetrant feed parameters, and the conditions for the pretreatment unit (deactivator, flocculant) for the printing heads 46 to 48 representing developed colors that are the closest to the target reproduced colors for individual regions of the printing medium P. The ink and penetrant feed parameters include voltage, frequency, and waveform that are outputted to the printing heads 46 to 48. The printing characteristics database 43 includes relations between amounts of printed inks of the respective colors and color development characteristics obtained after the color development treatment is completed. Included are relations between, for example, inclusion/omission of the aggregative material and the flocculant or the amounts of the aggregative material and the flocculant and the resulting color development characteristics (spatial frequency characteristics of a printed image, uniformity between the front and the reverse side).

The "penetrant" herein is a liquid for promoting appropriate penetration of applied ink into the printing medium and preferably a dispersion medium that is a component of the ink. Application of the "penetrant" enables the ink to reach the reverse surface of the printing medium even when printing is done with a small amount of ink.

The feed condition calculator 42 is connected to the controller 44. The controller 44 controls the printing on the printing medium P by entering in the printing driver 45 electric signals representing the kinds of ink, the ink feed parameters, and the penetrant feed parameters selected by the feed condition calculator 42 as required separately for the individual regions.

The controller 44 is connected to the printing driver 45. The printing driver 45 drives the printing heads 46 to 48 according to the electric signals inputted from the controller 44.

The printing driver 45 is connected to the printing heads 46 to 48. The printing heads 46 to 48, which are so-called ink jet type printing heads, shoot four kinds of inks Y, M, C, and K or the penetrant. The printing head 46 shoots ink droplets at the printing medium P from the front side thereof; the printing head 47 shoots ink droplets at the printing medium P from the reverse side thereof. The printing head 48 shoots droplets of penetrant at the printing medium P from the front side thereof. The printing head 47 shoots ink droplets containing aggregative material at the printing medium P.

Downstream of the printing heads 46 to 48 in the moving direction of the printing medium P are located a heater 49, a reduction cleaning device 50, and a drier 51 to fix the coloring material contained in the ink onto the printing medium P.

Downstream of the drier 51 in the moving direction of the printing medium P are located a projecting region measuring device 52 and a base texture measuring device 53. The projecting region measuring device 52 is connected to a projecting region print measurement input unit 54; the base texture measuring device 53 is connected to a base texture print measurement input unit 55. The projecting region print measurement input unit 54 and the base texture print measurement input unit 55 are connected to the feed condition calculator 42.

The projecting region measuring device 52 and the base texture measuring device 53 measure the optical properties of a projecting region such as the raised portion and the base texture of the printing medium P to determine the amount of color development and each comprise a spectrophotometer having an integrating sphere or an optical sensor calibrated with a spectrophotometer. When a pattern is printed, an optical sensor that measures the spatial frequency characteristics corresponding to ink bleeding is preferably available for use. The projecting region print measurement input unit 54 and the base texture print measurement input unit 55 input the measurements obtained by the projecting region measuring device 52 and the base texture measuring device 53 to the feed condition calculator 42 thereby to feed back the results of the printing on the printing medium P. The feed condition calculator 42 obtains feed condition values of the ink and the penetrant to be shot, separately for the individual regions of the printing medium P, which values are so corrected that the measurements entered from the print measurement input unit 54 enable development of colors that is substantially the same as the target reproduced colors.

Next, the operation of the printing unit 41 illustrated in FIG. 11 will be described.

First, the feed condition calculator 42 searches the printing characteristics database 43 using operator-entered information on the printing medium P and information on the target reproduced colors of a print image to be printed on the printing medium P. The feed condition calculator 42 searches the information on the kinds of regions of the printing medium stored in the printing characteristics database 43 for information representing the same kinds as the regions (e.g., the base texture and the raised texture provided with the flocculant) of the printing medium P.

The feed condition calculator 42 uses data in the printing characteristics database 43 to obtain all the kinds of ink of the printing heads 46 and 47 (YMCK x 2 = 8 kinds), the feed parameters for the penetrant of the printing head 48, and the conditions for the pretreatment unit (deactivator, flocculant) such that the color development information on the individual regions of the printing medium P are the target information on color development.

Using data in the printing characteristics database 43, the feed condition calculator 42 may also estimate the color development when given the ink feed parameters of all the kinds of ink for the printing heads 46 and 47 and the penetrant of the printing head 48 and calculate color development information to obtain a combination of feed parameters by the optimization method such that the color development information is the target information on color development. Specifically, the equations (3) and (4) below are used to obtain the relation between printing amount and color development information using K/S. Then, use may be made of an optimization method exemplified by linear programming method using simplex procedure, successive approximation method, and genetic method. The feed condition calculator 42 may also obtain a plurality of combinations of feed parameters that are close to the target color reproduction stored in the printing characteristics database 43 and obtain optimal feed parameters by interpolation thereof.

$$K/S = (1-Rc)2/2Rc \ ... \ (3)$$

$$(K/S)mix$$

$$= Jy(K/S)y + Jm(K/S)m + Jc(K/S)c + Jk(K/S)k \ ...(4)$$

The equation (3) shows the relation between coloring material's absorption intensity K, light scattering intensity S of light from the printing medium, and reflectance Rc, for each wavelength. In the equation (4), (K/S)mix denotes K/S in a region where a plurality of coloring materials are printed and mixed; (K/S)y, (K/S)m, (K/S)c, and (K/S)k denote K/S where unit amounts of the four coloring materials are deposited, respectively; and Jy, Jm, Jc, and Jk denote the amounts of the four colors of coloring materials adhered to the printing medium.

Thus, the kinds of ink, the ink feed parameters, and the penetrant feed parameters selected by the feed condition calculator 42 respectively for the individual regions of the printing medium P are outputted to the controller 44. The controller 44 outputs the ink and penetrant feed parameters to the printing driver 45, which in turn outputs drive signals corresponding to these feed parameters to the head sections of the printing heads 46 to 48 respectively corresponding to the kinds of ink and the penetrant, whereupon the ink and the penetrant droplets are shot at the individual regions of the printing medium P.

Thus, even when the printing medium contains composite regions including the base texture having a great capillary force and a fastener element portion or the raised portion having a small capillary force, development of a color that is substantially the same as a target color can be achieved in the individual regions while color development as targeted in terms of uniformity in the thickness direction of the printing medium P and spatial frequency characteristics can also be achieved.

In conjunction with the movement of the printing medium P, ink and penetrant droplets are repeatedly shot at all the regions according to the ink and penetrant feed parameters selected for the individual regions of the printing medium P. The printing medium P, on which printing has been made, is heated by the heater 49, subjected to reduction cleaning through the reduction cleaning device 50, and dried by the drier 51. The dried printing medium P undergoes color measurement through the projecting region measuring device 52 and the base texture measuring device 53, whereupon the measurements are entered into the feed condition calculator 42 through the projecting region print measurement input unit 54 and the base texture print measurement input unit 55.

Where the entered measurements are outside an allowable range of chromaticities of the target reproduced colors, the feed condition calculator 42 corrects the feed parameters of the ink and the penetrant to be ejected from the respective head sections of the printing heads 46 to 48 so that the measurements entered from the projecting region print measurement input unit 54 and the base texture print measurement input unit 55 coincide with the chromaticities of the target reproduced colors. The ink and penetrant feed parameters corrected by the feed condition calculator 42 are outputted to the controller 44, which then controls the drive of the respective head sections of the printing heads 46 to 48 by the printing driver 45 according to the ink and penetrant feed parameters, thereby achieving printing on the printing medium P. When a first attempt at correction fails to contain the measurements in an allowable range of chromaticities of the target reproduced colors, the above correction is preferably repeated until the measurements are contained in the allowable range.

When the entered measurements are outside the allowances of the target values in terms of the degree of uniformity between the front and the reverse side and the spatial frequency, the supply conditions for the pretreatment unit may be corrected to meet the target values.

Thus, even when the accuracy of the initial calculations is poor or the physical properties of, for example, the inks and the printing medium P change with time or due to the environment, the difference or change in the amount of color development can be effectively restricted because the results of printing on the printing medium P are fed back to achieve printing on the printing medium P with corrected ink and penetrant feed parameters.

The feed condition calculator 42 may be adapted to have a learning function whereby the feed parameters corrected by feedback of the printing results are stored in the printing characteristics database 43 whenever correction is made or whereby the feed parameters stored in the printing characteristics database 43 are renewed with the corrected feed parameters. Through such learning effected each time printing is implemented, the accuracy of the information stored in the printing characteristics database 43 can be continually enhanced.

REFERENCE SIGNS LIST

1 pretreatment unit; 2, 41 printing unit; 3 deactivator supplier; 4, 4a, 4b flocculant supplier; 5, 6, 46 to 48 printing head; 7, 49 heater; 8, 50 reduction cleaning device; 9, 51 drier; 10 base texture; 11 snap; 12 cover; 21 pit; 22 projection; 23 matted region; 24, 25 surface; 31 ink jet device; 42 feed condition calculator; 43 printing characteristics data base; 44 controller; 45 printing driver; 52 projecting region measuring device; 53 base texture measuring device; 54 projecting region print measurement input unit; 55 base texture print measurement input unit; P printing medium; G base texture; S snap portion; D design printing.

**Claims**

1. A printing method of printing by an ink jet method on a printing medium containing a region (11) where ink is not easily retained due to a small capillary force and a region (10) where ink is easily retained due to a great capillary force, the printing method comprising:

   supplying a flocculant for promoting aggregation reaction of aggregative material that gels by aggregation to at least the region (11) of a printing medium (P) having a small capillary force,
   shooting droplets of ink containing the aggregative material by an ink jet method to at least the region (11) of the printing medium (P) having a small capillary force, and
   fixing the ink that has gelled by the aggregation reaction between the aggregative material and the flocculant onto the printing medium (P), wherein
   a deactivator adapted to deactivate the aggregation reaction between the flocculant and the aggregative material is supplied to the region (10) of the printing medium (P) having a great capillary force before the flocculant is supplied, and
   the flocculant is supplied with its size and amount adjusted so that liquid droplets supplied to the region (11) of the printing medium (P) having a small capillary force do not move from the region (11) of the printing medium (P) having a small capillary force.

2. The printing method according to Claim 1, wherein the flocculant is supplied with its size and amount adjusted by atomization.

3. The printing method according to Claim 1, wherein the ink containing the aggregative material is supplied so as to gel before the flocculant supplied to the region (11) of the printing medium (P) having a small capillary force moves from the region (11) of the printing medium (P) having a small capillary force.

4. The printing method according to any one of Claims 1 to 3,

**EP 2 620 543 B1**

wherein the flocculant is supplied only to the region (11) of the printing medium (P) having a small capillary force.

5. The printing method according to any one of Claims 1 to 4,
   wherein the aggregative material contains an aqueous polymer dispersed in an aggregative material dispersion liquid and is aggregated by the flocculant to increase in viscosity.

6. The printing method according to any one of Claims 1 to 4,
   wherein the aggregation reaction is caused using the aggregative material containing an anionic surfactant dispersed in an aggregative material dispersion liquid and using an acid as the flocculant.

7. The printing method according to any one of Claims 1 to 4,
   wherein the aggregation reaction is caused using the aggregative material containing an organic cationic polymer dispersed in an aggregative material dispersion liquid and using an anionic surfactant as the flocculant, or the aggregation reaction is caused using the aggregative material containing an organic anionic polymer dispersed in an aggregative material dispersion liquid and using cationic surfactant as the flocculant.

8. The printing method according to any one of Claims 1 to 7,
   wherein the region (11) of the printing medium (P) having a small capillary force comprises a raised texture.

9. The printing method according to any one of Claims 1 to 7,
   wherein the region (11) of the printing medium (P) having a small capillary force comprises a polyester-made structure.

10. The printing method according to any one of Claims 1 to 7,
    wherein the printing medium (P) is a nonwoven fabric, where the region (10) having a great capillary force includes a region having a high fiber density.

11. A printing device for printing by an ink jet method on a printing medium containing a region (11) where ink is not easily retained due to a small capillary force and a region (10) where ink is easily retained due to a great capillary force, the device comprising:

    a flocculant supplier (4) adapted to supply a flocculant for promoting aggregation reaction of an aggregative material that gels by aggregation to at least a region (11) of the printing medium (P) having a small capillary force, an ink supplier (5, 6) adapted to shoot droplets of ink containing the aggregative material by an ink jet method to at least the region (11) of the printing medium (P) having a small capillary force, and a fixing device (7, 8, 9) adapted to fix the ink that has gelled by the aggregation reaction between the aggregative material and the flocculant onto the printing medium (P), wherein the printing device includes a deactivator supplier (3) adapted to supply a deactivator to deactivate the aggregation reaction between the flocculant and the aggregative material to a region (10) of the printing medium (P) having a great capillary force before the flocculant is supplied by the flocculant supplier (4), and wherein the flocculant supplier (4) is adapted to supply the flocculant with its size and amount adjusted so that liquid droplets supplied to the region (11) of the printing medium (P) having a small capillary force do not move from the region (11) of the printing medium (P) having a small capillary force.

**Patentansprüche**

1. Druckverfahren zum Drucken mit Hilfe eines Tintenstrahlverfahrens auf einem Druckträger, der eine Zone (11) enthält, in der Tinte nicht leicht gehalten wird aufgrund einer geringen Kapillarkraft, und eine Zone (10) enthält, in der Tinte leicht gehalten wird aufgrund einer starken Kapillarkraft, wobei das Druckverfahren umfasst:

    Zuführen eines Flockungsmittel zum Fördern einer Aggregationsreaktion von aggregativem Material, welches durch Aggregation geliert, auf mindestens die Zone (11) eines Druckträgers (P), die eine geringe Kapillarkraft aufweist, Aufschießen von Tintentröpfchen, die das aggregative Material enthalten, mit Hilfe eines Tintenstrahlverfahrens auf mindestens die Zone (11) des Druckträgers (P) mit geringer Kapillarkraft, und Fixieren der Tinte, die durch die Aggregationsreaktion zwischen dem aggregativem Material und dem Flockungsmittel geliert ist, auf dem Druckträger (P), wobei ein Deaktivator, ausgebildet zum Deaktivieren der Aggregationsreaktion zwischen dem Flockungsmittel und dem aggregativem Material, zu der Zone (10) des Druckträgers (P) geleitet wird, die eine starke Kapillarkraft aufweist, bevor das Flockungsmittel zugeführt wird, und

das Flockungsmittel mit einer derartig eingestellten Größe und Menge zugeführt wird, dass Flüssigkeitströpfchen, die der Zone (11) des Druckträgers (P) mit geringer Kapillarkraft zugeleitet werden, sich nicht von der Zone (10) des Druckträgers (P) mit geringer Kapillarkraft fortbewegen.

2. Druckverfahren nach Anspruch 1, bei dem das Flockungsmittel mit seiner durch Atomisierung eingestellte Größe zugeführt wird.

3. Druckverfahren nach Anspruch 1, bei dem die das aggregative Material enthaltende Tinte derart zugeführt wird, dass es geliert, bevor das der Zone (11) des Druckträgers (P) mit geringer Kapillarkraft zugeführte Flockungsmittel sich von der Zone (11) des Druckträgers (P) mit geringer Kapillarkraft fortbewegt.

4. Druckverfahren nach einem der Ansprüche 1 bis 3, bei dem das Flockungsmittel ausschließlich der Zone (11) der Druckträgers (P) mit geringer Kapillarkraft zugeführt wird.

5. Druckverfahren nach einem der Ansprüche 1 bis 4, bei dem das aggregative Material ein wässriges Polymer enthält, welches in einer Aggregativmaterial-Dispersionsflüssigkeit dispergiert ist und durch das Flockungsmittel aggregiert, um die Viskosität zu erhöhen.

6. Druckverfahren nach einem der Ansprüche 1 bis 5, bei dem die Aggregationsreaktion veranlasst wird unter Verwendung des aggregativen Materials, das ein anionisches Tensid, welches in einer Aggregativmaterial-Dispersionsflüssigkeit dispergiert ist, und unter Verwendung einer Säure als das Flockungsmittel.

7. Druckverfahren nach einem der Ansprüche 1 bis 4, bei dem die Aggregationsreaktion veranlasst wird unter Verwendung des Aggregativmaterials, welches ein in einer Aggregativmaterial-Dispersionsflüssigkeit dispergiertes organisches kationisches Polymer enthält, und unter Verwendung eines anionischen Tensids als das Flockungsmittel, oder die Aggregationsreaktion veranlasst wird unter Verwendung des Aggregativmaterials, welches ein anorganisches anionisches Polymer, das in einer Aggregativmaterial-Dispersionsflüssigkeit dispergiert ist, enthält, und unter Verwendung eines kationischen Tensids als das Flockungsmittel.

8. Druckverfahren nach einem der Ansprüche 1 bis 7, bei dem die Zone (11) des Druckträgers (P) mit geringer Kapillarkraft eine erhabene Textur aufweist.

9. Druckverfahren nach einem der Ansprüche 1 bis 7, bei dem die Zone (10) des Druckträgers (P) mit geringer Kapillarkraft eine aus Polyester gefertigte Struktur aufweist.

10. Druckverfahren nach einem der Ansprüche 1 bis 7, bei dem der Druckträger (P) ein ungewebter Stoff ist, bei dem die Zone (10) mit starker Kapillarkraft eine Zone mit hoher Faserdichte enthält.

11. Druckvorrichtung zum Drucken mit Hilfe eines Tintenstrahlverfahrens auf einem Druckträger, der eine Zone (11) enthält, in der Tinte nicht leicht gehalten wird aufgrund einer geringen Kapillarkraft, und eine Zone (10) enthält, in der Tinte leicht gehalten wird aufgrund einer starken Kapillarkraft, umfassend:

einen Flockungsmittel-Zuführer (4), ausgebildet zum Zuführen eines Flockungsmittels zum Fördern einer Aggregationsreaktion eines aggregativen Materials, welches durch Aggregieren geliert, zu mindestens einer Zone (11) des Druckträgers (P), die geringe Kapillarkraft aufweist,

einen Tintenzuführer (5, 6), ausgebildet zum Aufschießen von Tintentröpfchen, die das aggregative Material enthalten, nach einem Tintenstrahlverfahren auf mindestens die Zone (11) des Druckträgers (P) mit geringer Kapillarkraft, und

eine Fixiereinrichtung (7, 8, 9) ausgebildet zum Fixieren der Tinte, die durch die Aggregationsreaktion zwischen dem aggregativen Material und dem Flockungsmittel geliert ist, auf dem Druckträger (P),

wobei die Druckvorrichtung einen Deaktivator-Zuführer (3) enthält, ausgebildet zum Zuführen eines Deaktivators zum Deaktivieren der Aggregationsreaktion zwischen dem Flockungsmittel und dem aggregativen Material, zu einer Zone (10) des Druckträgers (P) mit starker Kapillarkraft, bevor das Flockungsmittel von dem Flockungsmittel-Zuführer (4) zugeführt wird, und

der Flockungsmittel-Zuführer (4) dazu ausgebildet ist, das Flockungsmittel mit dessen derart eingestellter Größe und Menge zuzuführen, dass Tintentröpfchen, die der Zone (11) des Druckträgers (P) mit geringer Kapillarkraft zugeführt werden, sich nicht aus der Zone (11) des Druckträgers (P) mit geringer Kapillarkraft fortbewegen.

**Revendications**

1. Procédé d'impression pour imprimer par un procédé à jet d'encre sur un support d'impression contenant une région (11), où l'encre n'est pas facilement retenue en raison d'une faible force capillaire, et une région (10), où l'encre est facilement retenue en raison d'une grande force capillaire, le procédé d'impression comprenant :

   l'alimentation d'un floculant pour favoriser une réaction d'agrégation de matière d'agrégation qui gélifie par agrégation vers au moins la région (11) d'un support d'impression (P) présentant une faible force capillaire ;
   le tir de gouttelettes d'encre contenant la matière d'agrégation par un procédé à jet d'encre vers au moins la région (11) du support d'impression (P) présentant une faible force capillaire, et
   la fixation de l'encre ayant gélifié par la réaction d'agrégation entre la matière d'agrégation et le floculant sur le support d'impression (P),

   dans lequel

   un désactivant apte à désactiver la réaction d'agrégation entre le floculant et la matière d'agrégation est alimenté vers la région (10) du support d'impression (P) présentant une grande force capillaire avant l'alimentation du floculant, et
   le floculant est alimenté avec sa taille et sa quantité réglées de telle sorte que les gouttelettes de liquide alimentées vers la région (11) du support d'impression (P) présentant une faible force capillaire ne quittent pas la région (11) du support d'impression (P) présentant une faible force capillaire.

2. Procédé d'impression selon la revendication 1,
   dans lequel le floculant est alimenté avec sa taille et sa quantité réglées par atomisation.

3. Procédé d'impression selon la revendication 1,
   dans lequel l'encre contenant la matière d'agrégation est alimentée de manière à gélifier avant que le floculant alimenté vers la moins la région (11) du support d'impression (P) présentant une faible force capillaire ne quitte la région (11) du support d'impression (P) présentant une faible force capillaire.

4. Procédé d'impression selon l'une quelconque des revendications 1 à 3,
   dans lequel le floculant n'est alimenté que vers la région (11) du support d'impression (P) présentant une faible force capillaire.

5. Procédé d'impression selon l'une quelconque des revendications 1 à 4,
   dans lequel la matière d'agrégation contient un polymère aqueux dispersé dans un liquide de dispersion de matière d'agrégation et est agrégé par le floculant pour augmenter la viscosité.

6. Procédé d'impression selon l'une quelconque des revendications 1 à 4,
   dans lequel la réaction d'agrégation est provoquée à l'aide de la matière d'agrégation contenant un surfactant anionique dispersé dans un liquide de dispersion de matière d'agrégation et à l'aide d'un acide comme floculant.

7. Procédé d'impression selon l'une quelconque des revendications 1 à 4,
   dans lequel la réaction d'agrégation est provoquée à l'aide de la matière d'agrégation contenant un polymère cationique organique dispersé dans un liquide de dispersion de matière d'agrégation à l'aide d'un surfactant anionique comme floculant, ou
   la réaction d'agrégation est provoquée à l'aide de la matière d'agrégation contenant un polymère anionique organique dispersé dans un liquide de dispersion de matière d'agrégation et à l'aide d'un surfactant cationique comme floculant.

8. Procédé d'impression selon l'une quelconque des revendications 1 à 7,
   dans lequel la région (11) du support d'impression (P) présentant une faible force capillaire comprend une texture surélevée.

9. Procédé d'impression selon l'une quelconque des revendications 1 à 7,
   dans lequel la région (11) du support d'impression (P) présentant une faible force capillaire comprend une structure en polyester.

10. Procédé d'impression selon l'une quelconque des revendications 1 à 7,
dans lequel le support d'impression (P) est un tissu non tissé, où la région (10) présentant une grande force capillaire inclut une région présentant une densité de fibres élevée.

11. Dispositif d'impression pour imprimer par un procédé à jet d'encre sur un support d'impression contenant une région (11), où l'encre n'est pas facilement retenue en raison d'une faible force capillaire, et une région (10), où l'encre est facilement retenue en raison d'une grande force capillaire, le dispositif comprenant :

un distributeur de floculant (4) apte à alimenter un floculant destiné à favoriser une réaction d'agrégation d'une matière d'agrégation qui gélifie par agrégation vers au moins une région (11) du support d'impression (P) présentant une faible force capillaire ;
un distributeur d'encre (5, 6) apte à tirer des gouttelettes d'encre contenant la matière d'agrégation par un procédé à jet d'encre vers au moins la région (11) du support d'impression (P) présentant une faible force capillaire, et
un dispositif de fixation (7, 8, 9) apte à fixer l'encre ayant gélifié par la réaction d'agrégation entre la matière d'agrégation et le floculant sur le support d'impression (P) ;
dans lequel le dispositif d'impression inclut un distributeur de désactivant (3) apte à alimenter un désactivant destiné à désactiver la réaction d'agrégation entre le floculant et la matière d'agrégation vers la région (10) du support d'impression (P) présentant une grande force capillaire avant l'alimentation du floculant par le distributeur de floculant (4), et
dans lequel le distributeur de floculant (4) est apte à alimenter le floculant avec sa taille et sa quantité réglées de telle sorte que les gouttelettes de liquide alimentées vers la région (11) du support d'impression (P) présentant une faible force capillaire ne quittent pas la région (11) du support d'impression (P) présentant une faible force capillaire.

# FIG.1

PRETREATMENT UNIT

DEACTIVATOR SUPPLIER — 3

P

FLOCCULANT SUPPLIER

4

PRINTING UNIT

COLORING MATERIAL INK PRINTING HEAD — 5

COLORING MATERIAL INK PRINTING HEAD — 6

HEATER 7

REDUCTION CLEANING DEVICE 8

DRIER 9

1

2

EP 2 620 543 B1

# FIG.2

(A)

(B)

# FIG.3

FLOCCULANT SUPPLIER 4

## FIG.4

## FIG.5

## FIG.6

## FIG.7

# FIG.8

PRETREATMENT UNIT 1

DEACTIVATOR SUPPLIER 3

FLOCCULANT SUPPLIER 4

P

PRINTING UNIT 2

COLORING MATERIAL INK PRINTING HEAD 5

COLORING MATERIAL INK PRINTING HEAD 6

HEATER 7

REDUCTION CLEANING DEVICE 8

DRIER 9

# FIG.9

(A)                                                    (B)

P

P

# FIG.10

| INK JET DEVICE |
| COLORING |
| FLOCCULANT MATERIAL INK |

— 31

P

FIG.11

# FIG.12

# FIG.13

# FIG.14

# FIG.15

EP 2 620 543 B1

# FIG.16

EP 2 620 543 B1

**PRETREATMENT UNIT** — 1

FLOCCULANT SUPPLIER — 4a

P

FLOCCULANT SUPPLIER — 4b

**PRINTING UNIT** — 2

COLORING MATERIAL INK PRINTING HEAD — 5

PRINTING HEAD COLORING MATERIAL INK — 6

HEATER — 7

REDUCTION CLEANING DEVICE — 8

DRIER — 9

FIG.17

**EP 2 620 543 B1**

**Patent documents cited in the description**

- JP 3069631 A
- US 2009104367 A1
- EP 1125760 A1
- JP 2003247179 A
- JP 2008231617 B
- EP 2078786 A2
- JP 0879782 B
- JP 0946869 B
- JP 1125326 B
- JP 57019084 A
- JP 60238193 A